# EUROPEAN PATENT APPLICATION

(11) **EP 3 091 631 A1**
(43) Date of publication of application: **09.11.2016**
(21) Application number: 15166931.4
(22) Date of filing: 08.05.2015
(51) Int. Cl.: H02J 3/18, H02M 7/537, B60M 3/06

(54) **METHOD FOR OPERATING A BIDIRECTIONAL CONVERTER ARRANGEMENT**

(71) Applicant: ABB Technology AG, 8050 Zürich (CH)
(72) Inventor: Wider, Bjoern, 8048 Zürich (CH)
(74) Representative: ABB Patent Attorneys

(57) **Abstract**

The invention relates to a method for operating a bidirectional converter arrangement (1) either in an inverter-operating mode or in a STATCOM-operating mode, the bidirectional converter arrangement (1) comprising an AC side (3) adapted for connecting to an AC power network (7), an inverter (4) connected to the AC side (3) and to a DC side (6), the DC side (6) having a first line (8) on a first potential and a second line (8) on a second potential, the second potential being lower than the first potential, and a DC link capacitor (5) arranged at the DC side (6) and connected between the first line (8) and the second line (8), and an at least unidirectional current power semiconductor switching device (2) connected to the first line (8) and/or the second line (8) of the DC side (6) and adapted for connecting to a DC power network (9).

## Description

### Technical Field

The invention relates to a method for operating a bidirectional converter arrangement, the bidirectional converter arrangement comprising an AC side adapted for connecting to an AC power network, an inverter connected to the AC side and to a DC side, the DC side having a first line on a first potential and a second line on a second potential, the second potential being lower than the first potential, and a DC link capacitor arranged at the DC side and connected between the first line and the second line. The invention further relates to a respective bidirectional converter arrangement.

### Background Art

DC power networks, also referred to as DC traction grids, are known from prior art as DC electricity grids for supplying direct current to electrified rail networks, for example to trains, tramways and the like. Traditionally, three phase alternating current from an AC power network is converted by power transformers, rotary transformers, static inverters, directional diode rectifiers and/or thyristors into a voltage and a direct current required by the trains. In recent days, possibilities for feeding back electrical energy, resulting for example from braking processes of the trains, into the AC power network have been implemented. In particular, thyristor inverters or self-commutating semiconductors like IGBTs have been installed to operate in parallel to said traditional diode rectifiers. This way, the DC power network is fed with direct current from the AC power network, and in a bidirectional way, direct current resulting for example from braking processes of the trains is fed back from the DC power network into the AC power network.

However, respective converters known from prior art for feeding back electrical energy into the AC power network have been proven very inflexible. In particular, converters known from prior art do not provide desired availability levels, as said converters are very susceptible in regard to short-circuits occurring within the DC power network. Furthermore, the AC power networks themselves are often characterized by a poor power factor and poor voltage stability.

### Summary of invention

Therefore, it is an object of the invention to provide an improved circuit arrangement for electrical power supply between a preferably three-phase AC power network and a DC power network, for feeding direct current back from the DC power network to the AC power network and for improving power factor and voltage stability of the AC power network.

The object of the invention is solved by the features of the independent claims. Preferred embodiments are detailed in the dependent claims.

Thus, the object is solved by a method for operating a bidirectional converter arrangement either in an inverter-operating mode or in a STATCOM-operating mode, the bidirectional converter arrangement comprising an AC side adapted for connecting to an AC power network, an inverter connected to the AC side and to a DC side, the DC side having a first line on a first potential and a second line on a second potential, the second potential being lower than the first potential, and a DC link capacitor arranged at the DC side and connected between the first line and the second line, and an at least unidirectional current power semiconductor switching device connected to the first line and/or the second line of the DC side and adapted for connecting to a DC power network, whereby the bidirectional converter arrangement is configured to execute at least the following two steps of: feeding, in the STATCOM-operating mode, reactive and/or capacitive electrical power into the AC power network by boosting the DC side above a voltage that is greater than a rectified AC voltage of the AC power network and greater than a DC voltage of the DC power network, or feeding, in the inverter-operating mode, active electrical power from the DC power network into the AC power network by inverting a DC voltage of the DC power network into an AC voltage.

A key point of the invention is therefore to provide a bidirectional converter arrangement, which can be either operated in an inverter-operating mode or in a STATCOM-operating mode. In other words the operating method provides a dual-functionality for the bidirectional converter arrangement: In the inverter-operating mode active electrical power is fed back from the DC power network into the AC power network by inverting a DC voltage of the DC power network into an AC voltage. However, by boosting the DC side above a voltage that is greater than a rectified AC voltage of the AC power network and greater than a DC voltage of the DC power network, the unidirectional current power semiconductor switching device disconnects the bidirectional converter arrangement from the DC power network such that the bidirectional converter arrangement feeds reactive and/or capacitive electrical power into the AC power network. In the latter operating mode the bidirectional converter arrangement "behaves" like a STATCOM i.e. as a static synchronous compensator and thus acts as a "regulating device" for optimizing power factor and increasing voltage stability of the AC power network.

In an exemplary application for the bidirectional converter arrangement powering a train, a tramway or the like connected to the DC power network with direct current electrical power is provided by the AC power network and preferably transformed by a power transformer towards the voltage required by the train. The voltage is then rectified to direct current by a diode rectifier usually connected in parallel to the bidirectional converter arrangement and thereafter supplied to the train via the DC power network, preferably via a DC traction grid, a rail and/or a contact line to which the train is connected. During an acceleration phase requiring electrical power the bidirectional converter arrangement is quasi "inactive". If during a breaking phase electrical power is fed back from the train into the contact line, the voltage within the contact line is higher than the voltage provided by the diode rectifier. In such case, the bidirectional converter arrangement becomes "active" and feeds in its inverter-operating mode electrical power back into the AC power network. In addition, the bidirectional converter arrangement can be operated in its STATCOM-operating mode for feeding reactive and/or capacitive electrical power into the AC power network.

Preferably the unidirectional current power semiconductor switching device is provided as a diode, as a preferably self-commutating power semiconductor device, or as a preferably self-commutating power semiconductor device and a diode, whereby the diode is connected anti-parallel to the self-commutating power semiconductor device. The power semiconductor switching device is preferably provided as an insulated-gate bipolar transistor device (IGBT), as a bi-mode insulated-gate bipolar transistor device (BIGT) or as a reverse-conducting IGBT. It has been proven especially advantageous to connect the anode of the diode to the second line and the cathode of the diode to the traction DC power network, preferably to the rail of the DC power network. However, an opposite configuration with cathode connected to the first line and anode connected to the contact line is possible as well. The bidirectional converter arrangement, and its components such as the unidirectional current power semiconductor switching device, are preferably adapted to operate with a nominal current of ≥ 100A, ≥ 500A, ≥ 1000A, and/or ≤ 10.000A, ≤ 30.000A and/or to operate with a voltage of ≥ 300V, ≥ 1000 or ≥ 2.000V, and/or ≤ 5.000V, ≤ 10.000V or ≤ 20.000V. Preferably, an inductance is provided between the unidirectional current power semiconductor switching device and the DC power network, which advantageously allows for decreasing so called circulating currents respectively circuit currents.

According to a preferred embodiment, feeding reactive and/or capacitive electrical power comprises operating the inverter as boost converter in continuous or discontinuous mode and/or applying a preferably dq0 current control signal to the inverter. When operating the inverter as boost converter, the inverter, together with the DC link capacitor acting as energy storage element for providing the boosting, provide the voltage that is greater than the rectified AC voltage of the AC power network and greater than a DC voltage of the DC power network. As a consequence, the unidirectional current power semiconductor switching device disconnects the bidirectional converter arrangement from the DC power network. In said state the bidirectional converter arrangement operates in the STATCOM-operating mode for feeding reactive and/or capacitive electrical power into the AC power network. When the preferably dq0 current control signal is applied to the inverter, no active but only reactive and/or capacitive electrical power is fed as a consequence into the AC power network. For maintaining the voltage in the DC link capacitor during the STATCOM-operating mode an active power of the bidirectional converter arrangement is preferably equal to the losses in the bidirectional converter arrangement. For charging the DC link capacitor the power is preferably bigger then all losses in the bidirectional converter arrangement. For discharging the DC link capacitor the current is preferably smaller, zero or negative. The dq0 current control signal is preferably provided as direct-quadrature-zero transformation signal and allows for controlling the current flowing into the DC link capacitor.

According to a preferred embodiment the inverter is provided as a H-bridge topology comprising a plurality inverter cells and/or is provided as a 4Q voltage source converter. Preferably, each inverter comprises a self-commutating inverter semiconductor device and an anti-parallel diode connected anti-parallel to the self-commutating inverter semiconductor device. More preferably, the inverter is provided as defined in norm IEC 62501: 2009. Preferably, the self-commutating inverter semiconductor device is provided as an integrated gate-commutated thyristor device (IGCT), an insulated-gate bipolar transistor device (IGBT) and/or a silicon carbide based unipolar or bipolar switching device. In addition to that, any other suitable power semiconductor device could be used as well. Further preferably, the integrated gate-commutated thyristor device, the insulated-gate bipolar transistor device and/or a silicon carbide based unipolar or bipolar switching device is provided as bi-mode variant with integrated reverse-conducting diode as anti-parallel diode respectively as freewheeling diode on wafer-level as bidirectional current and at least unidirectional voltage semiconductor switching device. Exemplary, the IGBT is provided as a bi-mode insulated-gate bipolar transistor device (BIGT), whereby the BIGT and the anti-parallel diode utilize the same silicon volume in both operational modes. Such devices allow for a very cheap realisation as self-commutating power semiconductor devices, e.g. IGBTs, with anti-parallel diodes on the same silicon are available as integrated devices at attractive costs.

According to another preferred embodiment, a plurality of bidirectional converter arrangements are arranged in parallel, whereby the unidirectional current power semiconductor switching device is connected to the first line and/or to the second line of the DC side of one part of bidirectional converter arrangements, and the first line and/or the second line of the DC side of the another part of the bidirectional converter arrangements is adapted for connecting to the DC power network, and the method comprises the steps of: feeding reactive and/or capacitive electrical power into the AC power network by the one part of the bidirectional converter arrangements, and feeding active electrical power from the DC power network into the AC power network by the another part of the bidirectional converter arrangements. Thus, the one part of the bidirectional converter arrangements can be selectively used for feeding reactive and/or capacitive electrical power, whereby the another part of the bidirectional converter arrangements can be used for feeding active electrical power into the AC power network. Therefore, the embodiment allows for an independent control of the bidirectional converter arrangements. Each part may comprise a single or a plurality of bidirectional converter arrangements.

According to another preferred embodiment, a plurality of bidirectional converter arrangements are arranged in parallel and the method comprises step of: Communicating between at least two bidirectional converter arrangements for exchanging information preferably in regard to the operating mode. The information may comprise instructions for changing the operating mode, about a current and/or planned operating mode, and thus allows for a co-ordinated operation of several, distant bidirectional converter arrangements.

The object of the invention is further solved by a circuit arrangement for operating a bidirectional converter arrangement either in an inverter-operating mode or in a STATCOM-operating mode, comprising the bidirectional converter arrangement comprising an AC side adapted for connecting to an AC power network, an inverter connected to the AC side and to a DC side, the DC side having a first line on a first potential and a second line on a second potential, the second potential being lower than the first potential, and a DC link capacitor arranged at the DC side and connected between the first line and the second line, and an unidirectional current power semiconductor switching device connected to the first line and/or the second line of the DC side and adapted for connecting to a DC power network, whereby the bidirectional converter arrangement is configured, in the STATCOM-operating mode, for feeding reactive or capacitive electrical power into the AC power network by boosting the DC side above a voltage that is greater than a rectified AC voltage of the AC power network and greater than a DC voltage of the DC power network, and the bidirectional converter arrangement is configured, in the inverter-operating mode, for feeding active electrical power from the DC power network into the AC power network by inverting a DC voltage of the DC power network into an AC voltage.

In a further preferred embodiment the circuit arrangement comprises a plurality of bidirectional converter arrangements arranged in parallel, whereby the unidirectional current power semiconductor switching device is connected to the first line and/or to the second line of the DC side of one part of bidirectional converter arrangements, the first line and/or the second line of the DC side of the another part of the bidirectional converter arrangements is adapted for connecting to the DC power network, the one part of the bidirectional converter arrangements is configured for feeding reactive or capacitive electrical power into the AC power network, and the another part of the bidirectional converter arrangements is configured for feeding active electrical power from the DC power network into the AC power network.

In another preferred embodiment the one part comprises at least two bidirectional converter arrangements and all first lines and/or all second lines of the DC sides of all bidirectional converter arrangements of the one part are connected in parallel to the unidirectional current power semiconductor switching device. Thus, the one part of the unidirectional current power semiconductor switching devices share a common unidirectional current power semiconductor switching device such as a diode.

According to another preferred embodiment, a diode rectifier is provided, which is adapted for connecting to the AC power network, for connecting to the DC power network and for feeding electrical power from the AC power network to the DC power network. Generally, the diode rectifier can be implemented by using any means for rectifying alternating current to direct current as known to the man skilled in the art. Therefore, it is generally possible to use, for example, thyristors or other means known from prior art for rectifying alternating current to direct current. However, according to a preferred embodiment, the diode rectifier is provided as a six pulse diode rectifier. Preferably, each diode is connected to each end of each power transformer secondary winding on a secondary side of the power transformer. With such a rectifier an improved harmonic performance can be obtained when rectifying alternating current to direct current.

In a further preferred embodiment at least two bidirectional converter arrangements comprise preferably each a communication device adapted for communicating among themselves. The communication device is preferably provided as a wireless or wired modem or interface for electronically exchanging data, for example via GSM, UMTS, LTE or the like, and/or by using a communication protocol such as, for example, TCP/IP. The bidirectional converter arrangements are preferably adapted for exchanging information in regard a current, desired and/or planned inverter- and/or STATCOM-operating mode.

In another preferred embodiment feeding reactive or capacitive electrical power comprises operating the inverter as boost converter in continuous or in discontinuous mode and/or applying a dq0 (direct-quadrature-zero) current control signal to the inverter. In yet another preferred embodiment the circuit arrangement comprises a filter arranged on the AC side, whereby the filter preferably comprises at least one inductive element. According to a further preferred embodiment, the bidirectional converter arrangement is provided as a power electronic module having a common heat sink, the inverters are all arranged within the power electronic module and are all mechanically connected to the common heat sink, and the unidirectional current power semiconductor switching device is arranged within the power electronic module and is mechanically connected to the common heat sink. Preferably, the inverter and the unidirectional current power semiconductor switching device are mechanically mounted to the common heat sink, e.g. by means of screws or other means known from prior art.

In a further preferred embodiment the circuit arrangement comprises a power transformer adapted for connecting to the AC power network, whereby the AC side of the bidirectional converter arrangement and the diode rectifier are connected to the power transformer. The power transformer is preferably provided as a so called medium voltage, MV, power transformer and/or the bidirectional converter arrangement is preferably provided as a so called voltage source inverter and/or as a voltage source converter, whereby the bidirectional converter arrangement is further preferably adapted for converting direct current to alternating current. The AC power network is preferably provided as a three phase AC power network and/or AC grid, as an AC traction grid and/or an AC traction power network providing an AC voltage for example of 110 kV. The DC power network is preferably provided as a DC traction grid comprising rails and contact lines having, for example, a DC voltage of 3 kV. Other common voltages for DC traction grids are 650 V, 750 V or 1.5 kV. Preferably, the bidirectional converter arrangement comprises a plurality of inverters, which are connected between the AC side and the DC side.

In another preferred embodiment the inverter is provided as a H-bridge topology comprising a plurality inverter cells, is provided as a 4Q (four-quadrant) voltage source converter and/or comprises at least two half-bridges each comprising two self-commutating inverter semiconductor devices and two anti-parallel diodes connected anti-parallel to the commutating semiconductor devices and a centre tap for a respective AC phase. Each inverter preferably comprises three half-bridges each comprising two self-commutating inverter semiconductor devices and two anti-parallel diodes connected anti-parallel to the self-commutating inverter semiconductor devices and a centre tap for a respective AC phase.

In yet a further preferred embodiment the circuit arrangement comprises the DC power network and the DC power network comprises a contact line and a rail, whereby the contact line is connected to the first line and the rail is connected to the second line. The contact line is preferably arranged above the rail, whereby further preferably the rail and/or the contact line are electrically connected in regular or irregular intervals along their extension by the DC bus. The rail and/or the contact line can be provided as any rail respectively contact line known from prior art, for example as flat-bottom steel rails respectively as an overhead line or overhead wire used to transmit electrical energy to trams, trolleybuses and/or trains. According to a further preferred embodiment, the circuit arrangement comprises the power transformer adapted for connecting to the three-phase AC power network or connected to the AC power network, wherein the AC side of the bidirectional converter arrangement is connected and the diode rectifier are connected to the power transformer. The diode is preferably connected with its anode to the second line, preferably having a negative potential, and with its cathode to the DC power network, preferably to a rail having a negative potential.

Further embodiments and advantages are apparent for the man skilled in the art from before described method.

### Brief description of drawings

These and other aspects of the invention will be apparent from and elucidated with reference to the embodiments described hereinafter.

In the drawings:
Fig. 1 shows a circuit arrangement with a bidirectional converter arrangement according to a first preferred embodiment in a schematic view,
Fig. 2 shows the circuit arrangement with the bidirectional converter arrangement according to a second preferred embodiment in a schematic view,
Fig. 3 shows the circuit arrangement with a plurality of bidirectional converter arrangements according to a third preferred embodiment in a schematic view,
Fig. 4 shows the circuit arrangement with a plurality of bidirectional converter arrangements according to a fourth preferred embodiment in a schematic view, and
Fig. 5 shows two circuit arrangements according to a fifth preferred embodiment in a schematic view.

### Description of embodiments

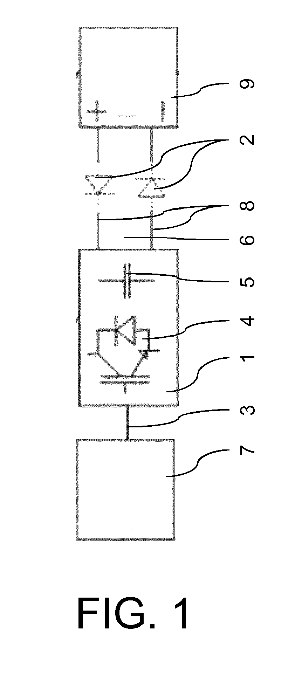

Fig. 1 shows a circuit arrangement for operating a bidirectional converter arrangement 1 either in an inverter-operating mode or in a STATCOM-operating mode according to a first preferred embodiment in a schematic view. The circuit arrangement comprises the bidirectional converter arrangement 1 and an unidirectional current power semiconductor switching device 2.

The bidirectional converter arrangement 1 comprises an AC side 3, an inverter 4, a the DC link capacitor 5 and a DC side 6. The AC side 3 is connected to a three-phase AC power network 7, such as an AC grid. The inverter 4 is connected between the AC side 3 and the DC side 6. The DC side 6 has a first line 8 on a first potential and a second line 8 on a second potential, whereby the second potential is lower than the first potential. The DC link capacitor 5 is arranged on the DC side 6 and connected between the first line 8 and the second line 8. The unidirectional current power semiconductor switching device 2 is provided as diode and is connected either, and thus depicted as dotted line, between the first line 8 or the second line 8 of the DC side 6 and a DC power network 9 i.e. either in the positive or in the negative path oriented in such a manner that only electrical power flow is possible from the DC power network 9 to the AC power network 7.

Thus, in case the diode is connected to the first line 8 having a higher potential than the second line 8, the anode of the diode is connected to the DC power network 9 and the cathode of the diode is connected to the DC side 6. A filter comprising an inductive element, not shown, can be arranged on AC side 7. The inverter 4 is provided as a H-bridge topology comprising a plurality inverter cells, whereby alternative configurations such as, for example, a 4Q voltage source converter and/or at least two half-bridges each comprising two self-commutating inverter semiconductor devices and two anti-parallel diodes connected anti-parallel to the commutating semiconductor devices and a centre tap for a respective AC phase are possible as well. In particular, the self-commutating inverter semiconductor devices are provided as IGBTs and realized with the diodes on the same silicon. In case the inverter is provided as a voltage source inverter, a further possible configuration comprises a half-bridge topology comprising six inverter cells, whereby each inverter cell comprises a self-commutating inverter semiconductor device provided as an IGBT and an anti-parallel diode connected anti-parallel to the self-commutating inverter semiconductor device.

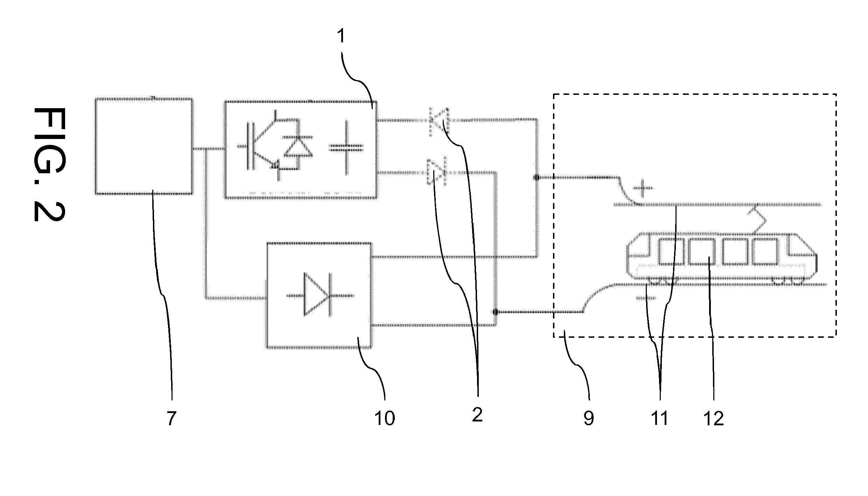

Fig. 2 shows the circuit arrangement of Fig. 1 in a preferred application for providing electrical power between the AC power network 7 and the DC power network 9. A diode rectifier 10 provided as a six pulse diode rectifier is connected on its output side to the DC power network 9 such that electrical power can be provided from the three-phase AC power network 7 to the DC power network 9, for example provided as a DC traction grid. The DC power network 9 comprises various rails 11 and contact lines 11 for providing direct current to trains 12 or other railway systems in electrical contact with the rails 11 and contact lines 11, such as catenaries. The Figs. exemplary show only a single rail 11, a single contact line 11 and a single train 12.

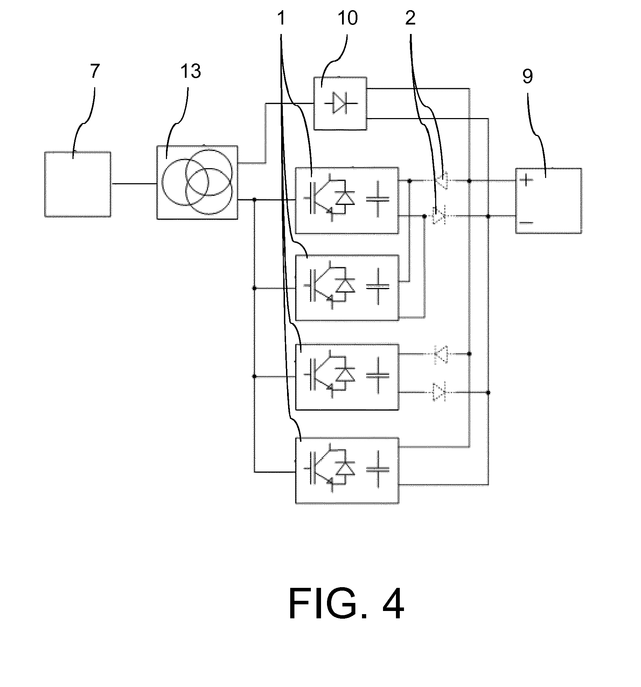

In order to regenerate energy from the DC power network 9 resulting e.g. from braking processes of trains 12 associated with the rail 11 and contact line 11, the bidirectional converter arrangement 1 allows for feeding active electrical power from the DC power network 9 into the AC power network 7 in the so called inverter-operating mode by inverting a DC voltage of the DC power network 9 into an AC voltage via the inverter 4. Fig. 4 shows a power transformer 13 connected between the three-phase AC power network 7 and the diode rectifier 10 and the AC side 7 of the bidirectional converter arrangement 1. The power transformer 13 is provided as medium voltage power transformer 1 and designed for transforming, for example, 25 kV three phase AC received from the AC power network 7 on its primary side to 750 V on its secondary side. Generally, the secondary side depends on the DC traction voltage which can be 750V, 1500V or 3000V and more. Primary side is depends on the locally provided UT grid, which varies strongly in each country. Each of the three phases of the secondary side of the power transformer 13 is connected to an input side of the diode rectifier 10 and to the AC side 7 of the bidirectional converter arrangement 1, whereby other configurations are possible as well.

As described before, the circuit arrangement is adapted for operating the bidirectional converter arrangement either in before described inverter-operating mode but also in the so called STATCOM-operating mode. In the STATCOM-operating mode, i.e. in the static synchronous compensator-operating mode, the circuit arrangement acts as regulating device for the AC power network 7. In particular, in the STATCOM-operating mode, the bidirectional converter arrangement 1 feeds reactive and/or capacitive electrical power into the AC power network 7 by boosting the DC side 6 of the bidirectional converter arrangement 1 above a voltage that is greater than a rectified AC voltage of the AC power network 7 and greater than a DC voltage of the DC power network 9.

More particularly, said boosting can be achieved, for example, by applying a dq0 current control signal to the inverter 4 or by operating the inverter 4 as a boost converter in continuous or in discontinuous mode. By such wise boosting the DC-link capacitor 5 above the rectified AC- voltage of the AC power network 7 and above the DC-voltage of the DC power network 9 the bidirectional converter arrangement 1 respectively the inverter 4 gets disconnected from the DC power network 9 by the diode 2 and thus can be independently operated as a STATCOM for feeding reactive and/or capacitive electrical power into the AC power network 7.

In other words, the bidirectional converter arrangement 1 is provided with a dual functionality respectively can be operated either in said inverter-operating mode or in said STATCOM-operating mode for feeding active electrical power from the DC power network 9 into AC power network 7 if the voltages are appropriate or, by disconnecting the bidirectional converter arrangement 1 respectively the inverter 4 from the DC power network 9 by boosting the DC-link capacitor 5 respectively the DC side 6 above the rectified AC-voltage of the AC power network 7 and above the DC-voltage of the DC power network 9, for operating the bidirectional converter arrangement 1 as STATCOM for feeding reactive and/or capacitive power at the AC power network 7.

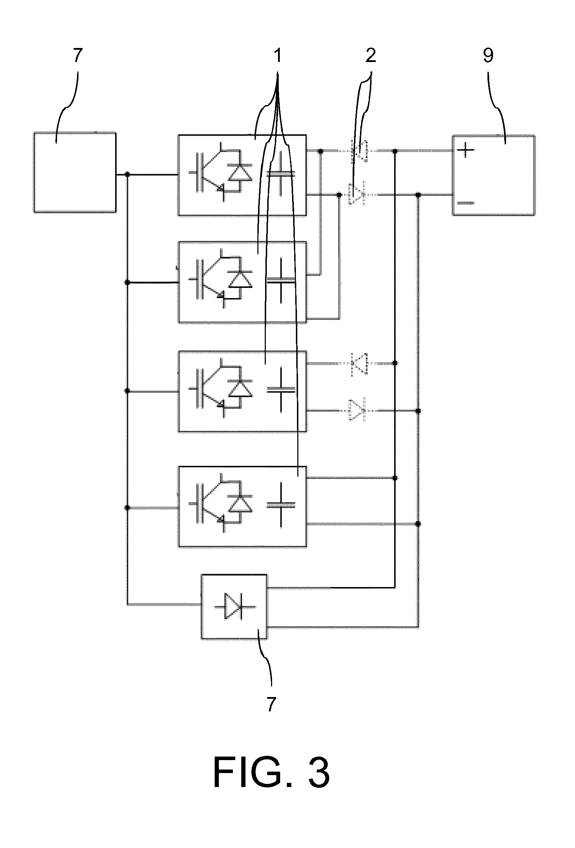

While Fig. 1 and 2 show first configurations for such operations, Fig. 3 shows an embodiment comprising four bidirectional converter arrangements 1 arranged in parallel between the AC power network 7 and the DC power network 9. In such configuration each bidirectional converter arrangement 1 can be operated independent from the other bidirectional converter arrangements 1. For the embodiment shown in Fig. 3, starting from the top, the first three bidirectional converter arrangements 1 are operated in before described STATCOM-operating mode for feeding reactive and/or or capacitive electrical power into the AC power network 7. Such wise the first three bidirectional converter arrangements 1 are connected between their first line 8 respectively second line 8 via a diode as unidirectional current power semiconductor switching device 2 with the DC power network 9, whereby the two topmost bidirectional converter arrangements 1 share a common diode by having their DC sides 6 connected in parallel. The fourth bidirectional converter arrangement 1 at the bottom is directly connected without a diode to the DC power network 9.

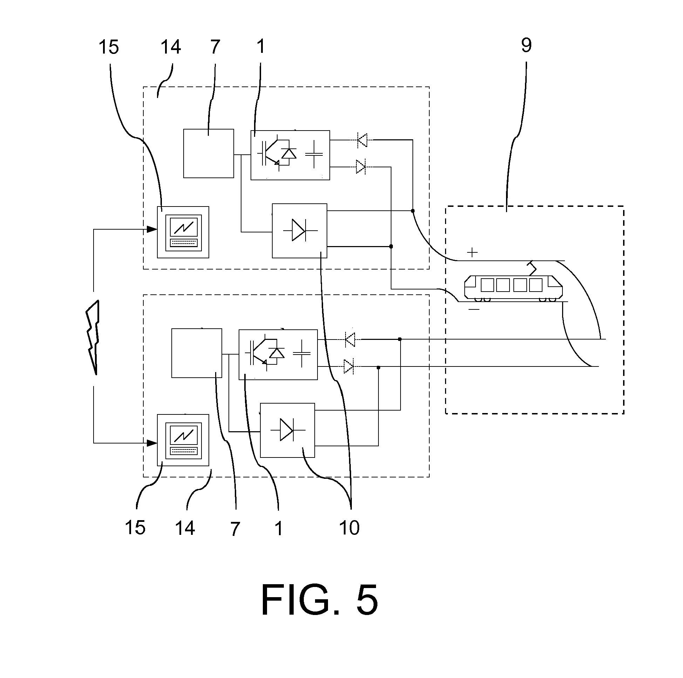

The already briefly mentioned embodiment shown in Fig. 4 differs from the embodiment shown in Fig. 3 in that the power transformer 13 is connected between the AC power network 7, connected to the primary side of the power transformer 13, and the four bidirectional converter arrangements 1 and the diode rectifier 10, both connected to the secondary side of the power transformer 13. Fig. 5 shows a further embodiment comprising two spatially remote substations 14, each comprising an embodiment as shown in one of Fig. 1 to 4 and each connected to the same AC power network 7 and/or DC power network 9. In addition, each substation14 comprise a communication device 15 adapted for wirelessly communicating among themselves. The communication device 15 may comprise a computer means and the like for exchanging information between the two substations 14, e.g. about the current operating mode of the respective substations 14.

While the invention has been illustrated and described in detail in the drawings and foregoing description, such illustration and description are to be considered illustrative or exemplary and not restrictive; the invention is not limited to the disclosed embodiments. Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: bidirectional converter arrangement
- 2: diode
- 3: AC side
- 4: inverter
- 5: DC link capacitor
- 6: DC side
- 7: AC power network
- 8: line
- 9: DC power network
- 10: diode rectifier
- 11: contact line, rail
- 12: train
- 13: power transformer
- 14: substation
- 15: communication device

## Claims

1. Method for operating a bidirectional converter arrangement (1) either in an inverter-operating mode or in a STATCOM-operating mode,
the bidirectional converter arrangement (1) comprising an AC side (3) adapted for connecting to an AC power network (7), an inverter (4) connected to the AC side (3) and to a DC side (6), the DC side (6) having a first line (8) on a first potential and a second line (8) on a second potential, the second potential being lower than the first potential, and a DC link capacitor (5) arranged at the DC side (6) and connected between the first line (8) and the second line (8), and
an at least unidirectional current power semiconductor switching device (2) connected to the first line (8) and/or the second line (8) of the DC side (6) and adapted for connecting to a DC power network (9), whereby
the bidirectional converter arrangement (1) is configured to execute at least the following two steps of:
feeding, in the STATCOM-operating mode, reactive and/or capacitive electrical power into the AC power network (7) by boosting the DC side (6) above a voltage that is greater than a rectified AC voltage of the AC power network (7) and greater than a DC voltage of the DC power network (9), or
feeding, in the inverter-operating mode, active electrical power from the DC power network (9) into the AC power network (7) by inverting a DC voltage of the DC power network (9) into an AC voltage.

2. Method according the previous claim, whereby feeding reactive and/or capacitive electrical power comprises operating the inverter (4) as boost converter in continuous or discontinuous mode and/or applying a preferably dq0 current control signal to the inverter (4).

3. Method according to any the previous claims, whereby the inverter (4) is provided as a H-bridge topology comprising a plurality inverter cells and/or is provided as a 4Q voltage source converter.

4. Method according to any the previous claims, comprising a plurality of bidirectional converter arrangements (1) arranged in parallel, whereby
the unidirectional current power semiconductor switching device (2) is connected to the first line (8) and/or to the second line (8) of the DC side (6) of one part of bidirectional converter arrangements (1), and
the first line (8) and/or the second line (8) of the DC side (6) of the another part of the bidirectional converter arrangements (1) is adapted for connecting to the DC power network (9), and comprising the steps of:
feeding reactive and/or capacitive electrical power into the AC power network (7) by the one part of the bidirectional converter arrangements (1), and
feeding active electrical power from the DC power network (9) into the AC power network (7) by the another part of the bidirectional converter arrangements (1).

5. Method according to any the previous claim 1 to 3, comprising a plurality of bidirectional converter arrangements (1) arranged in parallel and the step of:
Communicating between at least two bidirectional converter arrangements (1) for exchanging information preferably in regard to the operating mode.

6. Circuit arrangement for operating a bidirectional converter arrangement (1) either in an inverter-operating mode or in a STATCOM-operating mode, comprising
the bidirectional converter arrangement (1) comprising an AC side (3) adapted for connecting to an AC power network (7), an inverter (4) connected to the AC side (3) and to a DC side (6), the DC side (6) having a first line (8) on a first potential and a second line (8) on a second potential, the second potential being lower than the first potential, and a DC link capacitor (5) arranged at the DC side (6) and connected between the first line (8) and the second line (8), and
an at least unidirectional current power semiconductor switching device (2) connected to the first line (8) and/or the second line (8) of the DC side (6) and adapted for connecting to a DC power network (9), whereby
the bidirectional converter arrangement (1) is configured, in the STATCOM-operating mode, for feeding reactive and/or capacitive electrical power into the AC power network (7) by boosting the DC side (6) above a voltage that is greater than a rectified AC voltage of the AC power network (7) and greater than a DC voltage of the DC power network (9), and
the bidirectional converter arrangement (1) is configured, in the inverter-operating mode, for feeding active electrical power from the DC power network (9) into the AC power network (7) by inverting a DC voltage of the DC power network (9) into an AC voltage.

7. Circuit arrangement according to the previous claim, comprising a plurality of bidirectional converter arrangements (1) arranged in parallel, whereby
the unidirectional current power semiconductor switching device (2) is connected to the first line (8) and/or to the second line (8) of the DC side (6) of one part of bidirectional converter arrangements (1),
the first line (8) and/or the second line (8) of the DC side (6) of the another part of the bidirectional converter arrangements (1) is adapted for connecting to the DC power network (9),
the one part of the bidirectional converter arrangements (1) is configured for feeding reactive and/or capacitive electrical power into the AC power network (7), and
the another part of the bidirectional converter arrangements (1) is configured for feeding active electrical power from the DC power network (9) into the AC power network (7).

8. Circuit arrangement according to the previous claim, wherein the one part comprises at least two the bidirectional converter arrangements (1) and all first lines (8) and/or all second lines (8) of the DC sides (6) of all bidirectional converter arrangements (1) of the one part are connected in parallel to the unidirectional current power semiconductor switching device (2).

9. Circuit arrangement according to any of the previous claims, comprising
a diode rectifier (10), which is adapted for connecting to the AC power network (7), for connecting to the DC power network (9) and for feeding electrical power from the AC power network (7) to the DC power network (9).

10. Circuit arrangement according to any of the previous claims 7 to 9, whereby at least two bidirectional converter arrangements (1) comprise a communication device (15) adapted for communicating among themselves.

11. Circuit arrangement according to any of the previous claims, whereby feeding reactive and/or capacitive electrical power comprises operating the inverter (4) as boost converter in continuous or in discontinuous mode and/or applying a dq0 current control signal to the inverter (4).

12. Circuit arrangement according to any previous claims, comprising a filter arranged on AC side (3), whereby the filter preferably comprises at least one inductive element.

13. Circuit arrangement according to any of the previous four claims, comprising a power transformer (13) adapted for connecting to the AC power network (7), whereby the AC side (3) of the bidirectional converter arrangement (1) and the diode rectifier (10) are connected to the power transformer (13).

14. Circuit arrangement according to any of the previous claims, whereby the inverter (4) is provided as a H-bridge topology comprising a plurality inverter cells, is provided as a 4Q voltage source converter and/or comprises at least two half-bridges each comprising two self-commutating inverter semiconductor devices and two anti-parallel diodes connected anti-parallel to the commutating semiconductor devices and a centre tap for a respective AC phase.

15. Circuit arrangement according to any of the previous claims, comprising the DC power network (9) and the DC power network (9) comprises a contact line (11) and a rail (11), whereby the contact line (11) is connected to the first line (8) and the rail (11) is connected to the second line (8).
